# EUROPEAN PATENT APPLICATION

(11) **EP 4 443 575 A1**
(43) Date of publication of application: **09.10.2024**
(21) Application number: 22901865.0
(22) Date of filing: 02.12.2022
(51) Int. Cl.: H01M 8/249, H01M 8/2465, H01M 8/0202

(54) **FUEL CELL SYSTEM**

(30) Priority: 02.12.2021 KR 20210170944
(71) Applicant: MICO POWER LTD, Gyeonggi-do 17567 (KR)
(72) Inventor: LEE, Jun Woo, Anseong-si Gyeonggi-do 17567 (KR); LEE, Byeong Cheol, Anseong-si Gyeonggi-do 17567 (KR); CHOI, Sung Ho, Anseong-si Gyeonggi-do 17567 (KR)
(74) Representative: Mewburn Ellis LLP
(86) International application number: PCT/KR2022/019489
(87) International publication number: WO 2023/101507

(57) **Abstract**

A fuel cell system is disclosed. The fuel cell system includes a support plate, a first fuel cell stack and a second fuel cell stack disposed to be spaced apart from each other on an upper portion of the support plate, a first current collection structure electrically connecting first current collection pads of the first and second fuel cell stacks to an external circuit, and a second current collection structure electrically connecting second current collection pads of the first and second fuel cell stacks to the external circuit, wherein the first current collection structure includes a first current collection portion having a first end portion electrically connected to the external circuit, a second current collection portion extending to be not parallel to the first current collection portion from a second end portion opposite the first end portion of the first current collection portion and including an upper plate portion that is bent in a certain angle at an end of an extended length, and a third current collection portion including a first upper pad connection portion connected between a first side of the upper plate portion and a first bent groove, and a second upper pad connection portion connected to a second side of the upper plate portion parallel to the first side with the second bent groove therebetween.

## Description

### Technical Field

The present invention relates to a fuel cell system that may generate electric power by using hydrogen-containing fuel gas and oxygen-containing air.

### Background Art

Fuel cells generate electricity by using the reaction of hydrogen and oxygen. The fuel cells are generally used by connecting multiple fuel cell stacks, in which multiple fuel cells are stacked, for high outputs. In this case, the multiple fuel cell stacks are electrically connected to each other through an external current collection structure.

At this time, a height difference may occur between the multiple fuel cell stacks, and when the multiple fuel cell stacks are electrically connected to each other by using a sturdy external current collection structure, many problems may occur in the installation of a fuel cell stack, such as damage to the fuel cell stack, performing accurate adjustment of fuel cell stack spacing, and power loss due to damage or deformation caused by stress concentration.

### Disclosure

### Technical Problem

Therefore, an object to be achieved by the present invention is to provide a fuel cell system that facilitates an installation process of a fuel cell stack by electrically connecting first current collection pads of the fuel cell stack to an external circuit by using a first current collection structure that is flexible in vertical and horizontal directions.

### Technical Solution

A fuel cell system according to an embodiment of the present invention includes a support plate, a first fuel cell stack and a second fuel cell stack disposed to be spaced apart from each other on an upper portion of the support plate, a first current collection structure electrically connecting first current collection pads of the first and second fuel cell stacks to an external circuit, and a second current collection structure electrically connecting second current collection pads of the first and second fuel cell stacks to the external circuit, wherein the first current collection structure includes a first current collection portion having a first end portion electrically connected to the external circuit, a second current collection portion extending to be not parallel to the first current collection portion from a second end portion opposite the first end portion of the first current collection portion and including an upper plate portion that is bent in a certain angle at an end of an extended length, and a third current collection portion including a first upper pad connection portion connected between a first side of the upper plate portion and a first bent groove, and a second upper pad connection portion connected to a second side of the upper plate portion parallel to the first side with the second bent groove therebetween.

In one embodiment, each of the first upper pad connection portion and the second upper pad connection portion may include a first elastic section extending from the first bent groove or the second bent groove and orthogonal to the upper plate portion; and a second elastic section extending from an end of the first elastic section and orthogonal to the first elastic section.

In one embodiment, the second elastic section may be formed to have a first step portion at one point to include two regions having different thicknesses.

In one embodiment, the fuel cell system may further include a third bent groove formed at a boundary of the first step portion and located between the two regions of the second elastic section.

In one embodiment, a first extension portion extending in a horizontal direction from one long axis side on one side may be formed at an end of the thinner region among the two regions of the second elastic section, and a first bolting hole may be formed in the first expansion portion.

In one embodiment, the fuel cell system may further include a third fuel cell stack and a fourth fuel cell stack disposed on the support plate to be spaced apart from each other and configured to be adjacent to the first fuel cell stack and the second fuel cell stack, and the third collector may further include a third upper pad connection portion connected to the second side of the upper plate portion with a fourth bent groove therebetween and configured to be adjacent to the second upper pad connection portion, and a fourth upper pad connection portion connected to the first side of the upper plate portion with a fifth bent groove therebetween and configured to be adjacent to the first upper pad connection portion.

In one embodiment, the third upper pad connection portion may be spaced apart from the second upper pad connection portion in a longitudinal direction of the second side, and the fourth upper pad connection portion may be spaced apart from the first upper pad connection portion in a longitudinal direction of the first side.

In one embodiment, each of the third upper pad connection portion and the fourth upper pad connection portion may include a third elastic section extending from the fourth bent groove or the fifth bent groove and configured to be orthogonal to the upper plate portion, and a fourth elastic section extending from an end of the third elastic section and configured to be orthogonal to the third elastic section.

In one embodiment, the fourth elastic section may be formed to have second step portion at one point to include two regions having different thicknesses.

In one embodiment, the fuel cell system may further include a sixth bent groove formed at a boundary of the second step portion and located between the third elastic section and the fourth elastic section.

In one embodiment, a second extension portion extending horizontally from one long axis side on one side may be formed at an end of a thinner region among two regions of the fourth elastic section, and a second bolting hole may be formed in the second expansion portion.

### Advantageous Effects

According to the fuel cell system of the present invention, there is an advantage in that first current collection pads of a fuel cell stack are electrically connected to an external circuit by using a first current collection structure that is flexible in vertical and horizontal directions, and thereby, an installation process of the fuel cell stack may be easily performed.

### Description of Drawings

FIG. 1 is a view illustrating a fuel cell system according to an embodiment of the present invention.

FIG. 2 is an enlarged perspective view of a first current collection structure illustrated in FIG. 1.

### Mode for Invention

Hereinafter, a fuel cell system according to an embodiment of the present invention will be described in detail with reference to the attached drawings. Since the present invention may be variously changed and take various forms, specific embodiments are illustrated in the drawings, and the present invention is described in detail in the specification. However, this is not intended to limit the present invention to a specific disclosure form and should be understood to include all changes, equivalents, and substitutes included in the idea and technical scope of the present invention. While describing respective drawings, similar reference numerals are used for similar components. In the attached drawings, the dimensions of structures are enlarged from actual sizes for the sake of clarity of the present invention.

Terms, such as first and second may be used to describe various components, but the components should not be limited by the terms. The above terms are used only for the purpose of distinguishing one component from another. For example, a first component may be referred to as a second component, and similarly, the second component may also be referred to as the first component without departing from the scope of the present invention.

Terms used in the present disclosure are only used to describe specific embodiments and are not intended to limit the present invention. Singular expressions include plural expressions unless the context clearly dictates otherwise. In the present disclosure, terms, such as "comprise", "include", or "have" are intended to designate the presence of features, numbers, steps, operations, configuration elements, components, or combinations thereof described in the present disclosure, and should be understood that the terms do not exclude in advance the presence or possibility of addition of one or more other features, numbers, steps, operations, configuration elements, components or combinations thereof.

Unless otherwise defined, all terms used herein, including technical or scientific terms, have the same meaning as commonly understood by those skilled in the art to which the present invention pertains. Terms that are commonly used and defined in the dictionary should be interpreted as having a meaning consistent with the meaning in the context of the related technology, and should not be interpreted in an ideal or excessively formal sense unless clearly defined in the present invention.

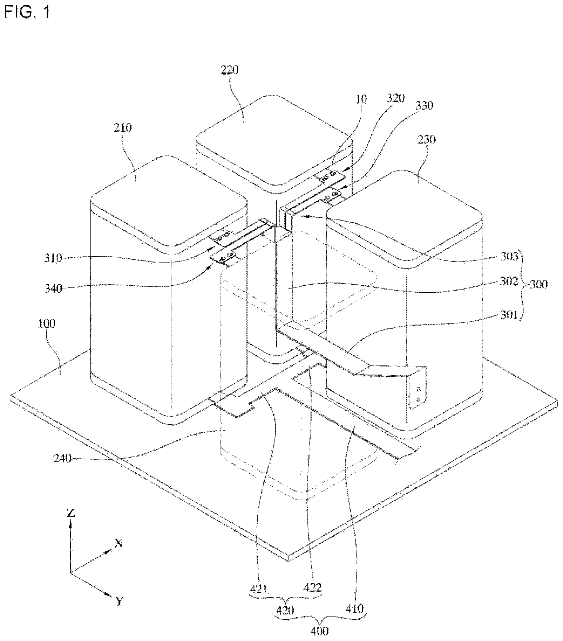

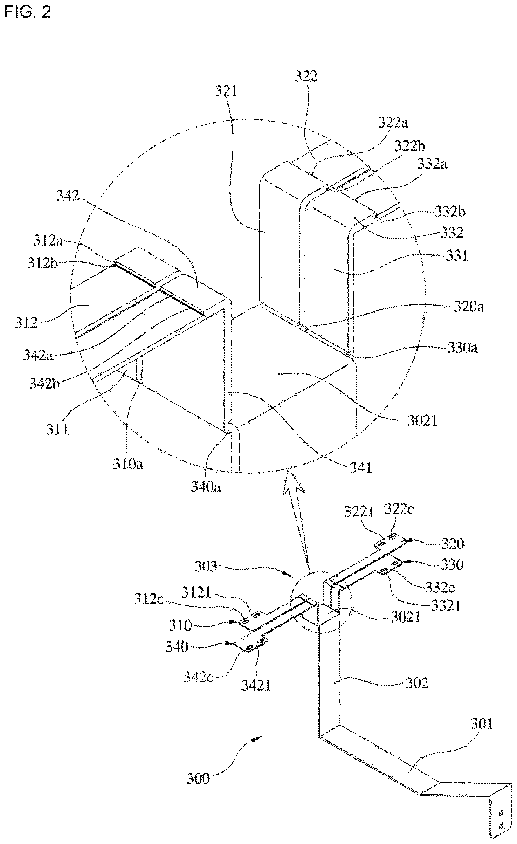

FIG. 1 is a view illustrating a fuel cell system according to an embodiment of the present invention, and FIG. 2 is an enlarged perspective view of a first current collection structure illustrated in FIG. 1.

Referring to FIG. 1, the fuel cell system according to the embodiment of the present invention includes a support plate 100, a plurality of fuel cell stacks 210, 220, 230, and 240, a first current collection structure 300, and a second current collection structure 400.

The support plate 100 may be disposed below the plurality of fuel cell stacks 210, 220, 230, and 240 to support the plurality of fuel cell stacks. A shape and a structure of the support plate 100 are not limited in particular as long as the support plate may stably support the plurality of fuel cell stacks 210, 220, 230, and 240.

The plurality of fuel cell stacks 210, 220, 230, and 240 may be disposed on the support plate 100. Each of the fuel cell stacks 210, 220, 230, and 240 may include an upper end plate, a lower end plate spaced apart from the upper end plate, and a unit cell stack disposed between the upper end plate and the lower end plate and stacked with a plurality of fuel cell unit cells.

The unit cell stack may include a plurality of stacked unit cells and a plurality of separation plates disposed between the unit cells to connect the unit cells in series.

In addition, each of the unit cells may have a structure including an electrolyte layer and a first electrode and a second electrode disposed on both sides of the electrolyte layer, and one of the first electrode and the second electrode is an anode electrode and the other is a cathode electrode. The unit cell may be a plate-type unit cell selected from a solid oxide fuel cell (SOFC), a polymer exchange membrane fuel cell (PEMFC), a molten carbonate fuel cell (MCFC), and so on.

The separation plate is formed of an electrically conductive material and is disposed between two adjacent unit cells to electrically connect a first electrode of a lower unit cell to a second electrode of an upper unit cell. By means of the separation plates, a plurality of unit cells located in one fuel cell stack may be connected in series.

The upper end plate and the lower end plate may be disposed respectively on an upper portion and a lower portion of the unit cell stack and may be formed of an electrically conductive material, for example, a metal material. The upper end plate may be electrically connected to a first electrode of the uppermost unit cell of the unit cell stack and may include a first current collection pad exposed to the outside of the fuel cell stack. In addition, the lower end plate may be electrically connected to a second electrode of the lowest unit cell of the unit cell stack and may include a second current collection pad exposed to the outside of the fuel cell stack. In one embodiment, in each fuel cell stack, the first current collection pad and the second current collection pad may be formed to protrude in the same direction and disposed to face each other while being spaced apart from each other.

In one embodiment, when the plurality of fuel cell stacks 210, 220, 230, and 240 have a square shape and include a first fuel cell stack 210, a second fuel cell stack 220, a third fuel cell stack 230, and a fourth fuel cell stack 240, first and second current collection pads of the first fuel cell stack 210 may be formed to protrude in a direction of the fourth fuel cell stack 240, first and second current collection pads of the second fuel cell stack 220 may be formed to protrude in a direction of the third fuel cell stack 230, first and second current collection pads of the third fuel cell stack 230 may be formed to protrude in a direction of the second fuel cell stack 220, and first and second current collection pads of the fourth fuel cell stack 240 may be formed to protrude in a direction of the first fuel cell stack 210.

Referring to FIG. 2, a first current collection structure 1300 may load the first current collection pads of the fuel cell stacks 210, 220, 230, and 240 or electrically connect the first current collection pads of the fuel cell stacks 210, 220, 230, and 240 to an external circuit (not illustrated), such as a power conversion device.

In one embodiment, a first current collection structure 300 may be formed integrally by processing a conductive metal plate. In one embodiment, the first current collection structure 300 may include a first current collection portion 301, a second current collection portion 302, and a third current collection portion 303.

A first end portion of the first current collection portion 301 may be electrically connected to an external circuit.

The second current collection portion 302 extends to be not parallel to the first current collection portion 301 from a second end portion opposite the first end portion of the first current collection portion 301, and may include an upper plate portion 3021 that is bent in a certain angle at an end of an extended length. For example, the second current collection portion 302 may extend vertically from the second end portion to form a right angle with the first current collection portion 301, and the upper plate portion 3021 may be disposed at an angle parallel to the support plate.

The third current collection portion 303 may be connected to the upper plate portion 3021 of the second current collection portion 302. In one embodiment, the third current collection portion 303 may include a first upper pad connection portion 310, a second upper pad connection portion 320, a third upper pad connection portion 330, and a fourth upper pad connection portion 340.

The first upper pad connection portion 310 may be connected to a first side of the upper plate portion 3021 with a first bent groove 310a therebetween. In one embodiment, the first upper pad connection portion 310 may include first elastic sections 311 and 321 that extend from the first bending groove 310a and that are perpendicular to the upper plate portion 3021, and second elastic sections 312 and 322 that extend from ends of the first elastic sections 311 and 321 and are perpendicular to the first elastic sections 311 and 321.

The second upper pad connection portion 320 may be connected to a second side of the upper plate portion 3021 parallel to the first side with a second bent groove 320a therebetween. In one embodiment, the second upper pad connection portion 320 may include first elastic sections 311 and 321 that extend from the second bent groove 320a and are perpendicular to the upper plate portion 3021, and second elastic sections 312 and 322 that extend from ends of the first elastic sections 311 and 321 and are perpendicular to the first elastic sections 311 and 321.

The third upper pad connection portion 330 may be connected to the second side with a fourth bent groove 330a therebetween and may be adjacent to the second upper pad connection portion 320. At this time, the third upper pad connection portion 330 may be spaced apart from the second upper pad connection portion 320 in a longitudinal direction of the second side. In one embodiment, the third upper pad connection portion 330 may include third elastic sections 331 and 341 that extend from the fourth bent groove 330a and are perpendicular to the upper plate portion 3021, and fourth elastic sections 332 and 342 that extend from ends of the third elastic sections 331 and 341 and are perpendicular to the third elastic sections 331 and 341.

The fourth upper pad connection portion 340 may be connected to the first side with a fifth bent groove 340a therebetween and may be adjacent to the first upper pad connection portion 310. At this time, the fourth upper pad connection portion 340 may be spaced apart from the first upper pad connection portion 310 in the longitudinal direction of the first side. In one embodiment, the fourth upper pad connection portion 340 may include third elastic sections 331 and 341 that extend from the fifth bent groove (340a) and are perpendicular to the upper plate portion 3021 and fourth elastic sections 332 and 342 that extend from ends of the third elastic sections 331 and 341 and are perpendicular to the third elastic sections 331 and 341.

Meanwhile, the second elastic sections 312 and 322 of each of the first upper pad connection portion 310 and the second upper pad connection portion 320 may have first step portions 312a and 322a at one point to include two regions having different thicknesses, and the third bent grooves 312b and 322b located between two regions of the second elastic sections 312 and 322 may be formed at boundaries of the first step portions 312a and 322a.

In addition, the fourth elastic sections 332 and 342 of each of the third upper pad connection portion 330 and the fourth upper pad connection portion 340 may respectively have second step portion 332a and 342a at one point to include two regions having different thicknesses, and sixth bent grooves 332b and 342b located between two regions of the fourth elastic section 332 and 342 may be formed boundaries of the second step portions 332a and 342a.

Meanwhile, first extension portions 3121 and 3221 extending in a horizontal direction from a long axis side on one side may be formed at an end of a thinner region among two regions of the second elastic sections 312 and 322 of each of the first upper pad connection portion 310 and the second upper pad connection portion 320, and first bolting holes 312c and 322c may be respectively formed in the first extension portions 3121 and 3221.

In addition, second extension portions 3321 and 3421 extending in a horizontal direction from a long axis side on one side may be formed at an end of a thinner region among two regions of the fourth elastic sections 332 and 342 of each of the third upper pad connection portion 330 and the fourth upper pad connection portion 340, and second bolting holes 332c and 342c may be respectively formed in the second extension portions 3321 and 3421.

Referring to FIG. 1, the second current collection structure 400 may electrically connect the second current collection pads of the fuel cell stacks 210, 220, 230, and 240 to an external circuit (not illustrated).

In one embodiment, the second current collection structure 400 may be formed integrally by processing a conductive metal plate. In one embodiment, the second current collection structure 400 may include a fourth current collection portion 410 having one end portion electrically connected to an external circuit, and a fifth current collection portion 420 having a plurality of lower pad connection portions, each being electrically connected to second current collection pads of the fuel cell stacks 210, 220, 230, and 240.

The fourth current collection portion 410 may be disposed to be adjacent to an upper surface of the support plate 1100, extend in parallel to the upper surface of the support plate 1100, have a preset width and thickness, and have a first end portion electrically connected to an external circuit. For example, the fourth current collection portion 410 may be disposed in parallel to the upper surface of the support plate 1100.

The fifth current collection portion 420 may have a certain length and width. For example, the fifth current collection portion 420 may include a first lower pad connection portion 421 and a second lower pad connection portion 422.

When the fuel cell system according to the embodiment of the present invention includes the first fuel cell stack 210, the second fuel cell stack 220, the third fuel cell stack 230, and the fourth fuel cell stack 240 disposed clockwise in a square shape, the first to fourth upper pad connection portions 340 of the third current collection portion 303 of the first current collection structure 300 may be respectively connected to the first electrode pads of each of the first to fourth fuel cell stacks 240, and the first lower pad connection portion 421 and the second lower pad connection portion 422 of the fifth current collection portion 420 of the second current collection structure 400 may be respectively connected to the second electrode pads of each of the first to fourth fuel cell stacks 240.

Meanwhile, the fuel cell system according to the embodiment of the present invention is configured such that the third current collection portion 303 has elasticity in the X-axis, Y-axis, and Z-axis directions illustrated in FIG. 1.

The elasticity in the X-axis direction may be provided by the first bent groove 310a between the first upper pad connection portion 310 and the upper plate portion 3021, the second bent groove 320a between the second upper pad connection portion 320 and the upper plate portion 3021, the fourth bent groove 330a between the third upper pad connection portion 330 and the upper plate portion 3021, and the fifth bent groove 340a between the fourth upper pad connection portion 340 and the upper plate portion 3021.

As the elasticity in the X-axis direction is provided in this way, when the third current collection portion 303 is connected to the first electrode pads of each of the first to fourth fuel cell stacks 240 and in a case where the first electrode pads are not close to the first to fourth upper pad connection portions 340 and are located far away in the X-axis direction, the first to fourth upper pad connection portions 340 may be easily connected to the first electrode pads by being pulled in the X-axis direction.

The elasticity in the Y-axis direction may be provided by a separation distance between the first upper pad connection portion 310 and the fourth upper pad connection portion 340, and a separation distance between the second upper pad connection portion 320 and the third upper pad connection portion 330.

As the elasticity in the Y-axis direction is provided in this way, when the third current collection portion 303 is connected to the first electrode pads of each of the first to fourth fuel cell stacks 240 and in a case where the first electrode pads are not close to the first to fourth upper pad connection portions 340 and are located far away in the Y-axis direction, the first to fourth upper pad connection portions 340 may be easily connected to the first electrode pads by being pulled in the Y-axis direction.

The elasticity in the Z-axis direction may be provided by the first step portions 312a and 322a and the third bent grooves 312b and 322b of the second elastic sections 312 and 322 of each of the first upper pad connection portion 310 and the second upper pad connection portion 320, and the second step portions 332a and 342a and the sixth bent grooves 332b and 342b of the fourth elastic sections 332 and 342 of each of the third upper pad connection portion 330 and the fourth upper pad connection portion 340.

As the elasticity in the Z-axis direction is provided in this way, when the third current collection portion 303 is connected to the first electrode pads of each of the first to fourth fuel cell stacks 210, 220, 230, and 240, in a case where the first electrode pads of the first to fourth fuel cell stacks 210, 220, 230, and 240 are not flat and some or all of the first electrode pads are twisted up and down, the first to fourth upper pad connection portions 310, 320, 330, and 340 may be easily connected to the uneven first electrode pads by being expanded and contracted up and down, and when the first to fourth upper pad connection portions 310, 320, 330, and 340 are connected to the twisted first electrode pads, the first electrode pads that are twisted by the restoring force of the first to fourth upper pad connection portions 310, 320, 330, and 340 may be corrected to a flat state.

Meanwhile, although not illustrated, the fuel cell system according to an embodiment of the present invention may further include a spacer (not illustrated) between the first to fourth upper pad connection portions 310, 320, 330, and 340 and between the first electrode pads to increase fixation force when the first to fourth upper pad connection parts 310, 320, 330, and 340 of the third current collection portion 303 are connected to the first electrode pads of each of the first to fourth fuel cell stacks 240. The spacer may be formed of a conductive metal plate.

When the first to fourth upper pad connection portions 310, 320, 330, and 340 of the third current collection portion 303 are connected to the first electrodes of each of the first to fourth fuel cell stacks 210, 220, 230, and 240, for example, after the spacer is interposed between the first upper pad connection portion 310 and the first electrode pad, fastening members 10, such as bolts illustrated in FIG. 1, may be respectively inserted into the first bolting holes 312c and 322c to penetrate the spacer, and the second to fourth upper pad connection portions 320, 330, and 340 may also be connected to the first electrode pads through structures of the first upper pad connection portion 310, the spacers, and the fastening members 10. Accordingly, the first to fourth upper pad connection portions 310, 320, 330, and 340 may be firmly fixed to the first electrode pads.

The description of the presented embodiments is provided to enable any person skilled in the art of the present invention to make or implement the present invention. Various modifications to the embodiments will be apparent to those skilled in the art of the present invention, and the general principles defined herein may be applied to other embodiments without departing from the scope of the present invention. Accordingly, the present invention is not limited to the embodiments presented herein, and should be construed in the broadest scope consistent with the principles presented herein and novel features.

## Claims

1. A fuel cell system comprising:
a support plate;
a first fuel cell stack and a second fuel cell stack disposed to be spaced apart from each other on an upper portion of the support plate;
a first current collection structure electrically connecting first current collection pads of the first and second fuel cell stacks to an external circuit; and
a second current collection structure electrically connecting second current collection pads of the first and second fuel cell stacks to the external circuit,
wherein the first current collection structure includes:
a first current collection portion having a first end portion electrically connected to the external circuit;
a second current collection portion extending to be not parallel to the first current collection portion from a second end portion opposite the first end portion of the first current collection portion and including an upper plate portion that is bent in a certain angle at an end of an extended length; and
a third current collection portion including a first upper pad connection portion connected between a first side of the upper plate portion and a first bent groove, and a second upper pad connection portion connected to a second side of the upper plate portion parallel to the first side with the second bent groove therebetween.

2. The fuel cell system of Claim 1, wherein
each of the first upper pad connection portion and the second upper pad connection portion includes:
a first elastic section extending from the first bent groove or the second bent groove and orthogonal to the upper plate portion; and
a second elastic section extending from an end of the first elastic section and orthogonal to the first elastic section.

3. The fuel cell system of Claim 2, wherein
the second elastic section is formed to have a first step portion at one point to include two regions having different thicknesses.

4. The fuel cell system of Claim 3, further comprising:
a third bent groove formed at a boundary of the first step portion and located between the two regions of the second elastic section.

5. The fuel cell system of Claim 4, wherein
a first extension portion extending in a horizontal direction from one long axis side on one side is formed at an end of the thinner region among the two regions of the second elastic section, and
a first bolting hole is formed in the first expansion portion.

6. The fuel cell system of Claim 5, further comprising:
a third fuel cell stack and a fourth fuel cell stack disposed on the support plate to be spaced apart from each other and configured to be adjacent to the first fuel cell stack and the second fuel cell stack,
wherein the third collector further includes:
a third upper pad connection portion connected to the second side of the upper plate portion with a fourth bent groove therebetween and configured to be adjacent to the second upper pad connection portion; and
a fourth upper pad connection portion connected to the first side of the upper plate portion with a fifth bent groove therebetween and configured to be adjacent to the first upper pad connection portion.

7. The fuel cell system of Claim 6, wherein
the third upper pad connection portion is spaced apart from the second upper pad connection portion in a longitudinal direction of the second side, and
the fourth upper pad connection portion is spaced apart from the first upper pad connection portion in a longitudinal direction of the first side.

8. The fuel cell system of Claim 7, wherein each of the third upper pad connection portion and the fourth upper pad connection portion includes:
a third elastic section extending from the fourth bent groove or the fifth bent groove and configured to be orthogonal to the upper plate portion; and
a fourth elastic section extending from an end of the third elastic section and configured to be orthogonal to the third elastic section.

9. The fuel cell system of Claim 8, wherein
the fourth elastic section is formed to have second step portion at one point to include two regions having different thicknesses.

10. The fuel cell system of Claim 9, further comprising:
a sixth bent groove formed at a boundary of the second step portion and located between the third elastic section and the fourth elastic section.

11. The fuel cell system of Claim 10, wherein
a second extension portion extending horizontally from one long axis side on one side is formed at an end of a thinner region among two regions of the fourth elastic section, and
a second bolting hole is formed in the second expansion portion.
